## Europäisches Patentamt
## European Patent Office
## Office européen des brevets

(19)

(11) Numéro de publication: **0 281 436**
**A1**

(12)

# DEMANDE DE BREVET EUROPEEN

(21) Numéro de dépôt: 88400176.9

(22) Date de dépôt: **27.01.88**

(51) Int. Cl.⁴: **G 02 B 5/124**
G 09 F 13/16, G 02 F 1/133

(30) Priorité: 12.02.87 FR 8701756
17.11.87 FR 8715847

(43) Date de publication de la demande:
07.09.88 Bulletin 88/36

(84) Etats contractants désignés:
AT BE CH DE ES GB GR IT LI NL SE

(71) Demandeur: **Harraca-Roehl, Martine**
**8, Passage Lemoine**
**F-75002 Paris (FR)**

**Roehl, Charles**
**8, Passage Lemoine**
**F-75002 Paris (FR)**

(72) Inventeur: **Harraca-Roehl, Martine**
**8, Passage Lemoine**
**F-75002 Paris (FR)**

**Roehl, Charles**
**8, Passage Lemoine**
**F-75002 Paris (FR)**

(74) Mandataire: **Morash, Daniel**
**17, Avenue La Bruyère**
**F-78160 Marly-le-Roi (FR)**

(54) **Matériau composite et écrans réalisés dans ce matériau.**

(57) Matériau composite remarquable en ce qu'il comprend au moins un ensemble (E) constitué par au moins une couche de base et au moins une couche de revêtement, et en ce que des particules (3) dont au moins l'une des faces est en une matière réfléchissante, sont disposées dans au moins l'une desdites couches (10, 11), la quantité desdites particules (3) étant au moins 3 % en poids de la couche dans laquelle elles sont disposées, et écrans réalisés avec le matériau.

FIG.1

EP 0 281 436 A1

**Description**

MATERIAU COMPOSITE ET ECRANS REALISES DANS CE MATERIAU

La présente invention concerne un matériau composite permettant une excellente réflexion et, le cas échéant, transmission de la lumière. Cette invention concerne également des écrans réalisés dans ce matériau composite.

Les matériaux connus ont un pouvoir relativement faible de réflexion et ont, en général, la tendance de présenter, lors de la projection de lumière sur ces matériaux connus, le phénomène de "points chauds" (HOT SPOTS), c'est-à-dire la création d'une image localisée très lumineuse de la source de lumière, notamment au caus où la lumière traverse ledit matériau, comme c'est, par exemple, le cas pour les rétro-projections ou encore pour les projections bifaciales où l'image projetée d'un côté dudit matériau peut être lue sur ses deux faces. La présente invention a pour objet de pallier ces inconvénients.

Conformément à la présente invention, le matériau composite est caractérisé en ce qu'il comprend au moins un ensemble constitué par au moins une couche de base et au moins une couche de revêtement, et en ce que des particules dont au moins l'une des surfaces est réfléchissante, sont disposées dans au moins l'une desdites couches, la quantité desdites particules étant au moins 3 % en poids de la couche dans laquelle elles sont disposées.

Le matériau peut être rigide ou flexible.

Plus particulièrement, ce matériau peut comporter au moins une couche de base, telle que le verre, ou en une matière synthétique rigide ou en une matière synthétique flexible, et au moins sur l'une de ses faces opposées une couche extérieure en un vernis.

Au moins l'une desdites couches peut être composée d'au moins une strate en une matière homogène (verre, acrylique, etc.).

La matière constitutive de ladite couche extérieure est, par exemple, un vernis à base glycérophtalique, la couche de base étant en verre.

Ou encore, la matière constitutive de ladite couche extérieure est, par exemple, un vernis à base acrylique ou vinylique, la couche de base étant en une matière synthétique, tel qu'acrylique ou équivalent.

La couche de base réalisé en une matière rigide peut avoir une épaisseur entre 1m/m à 50 m/m.

La couche de base réalisée en une matière flexible peut avoir une épaisseur maximum de 5 m/m et, de préférence, une épaisseur inférieure à 1 m/m.

L'épaisseur de la couche extérieure peut être inférieure à 0,5 m/m et, par exemple, de l'ordre de 4 microns (0,004 m/m).

Lesdites particules réfléchissantes sont incorporées dans la (ou les) couche (s) extérieure (s).

Lesdites particules peuvent être en un métal approprié tel que l'aluminium (Al) ou équivalent ou un alliage d'aluminium ou équivalent, lesdites particules ayant un pouvoir de réflexion diffusée (ALBEDO) élevé.

Lesdites particules peuvent être réalisées sous forme de plaquettes sensiblement parallélépipédiques ayant une épaisseur maximale à celle de la couche extérieure.

Au moins l'une des faces d'au moins de l'une desdites couches est rugueuse.

La profondeur de rugosité moyenne est très fine jusqu'à moyenne (0,04 μ à 6 μ) selon les définitions précisées dans les DIN (Deutsche Industrie Normen) No 4763 et 4764.

Selon un premier mode de réalisation, au moins l'une des couches d'un ensemble est au moins partiellement opaque.

Selon un autre mode de réalisation, toutes les couches sont au moins partiellement translucides ou transparentes.

Pour tous modes de réalisation, la couche de base est en une matière rigide ou flexible tandis que la (les) couche (s) de revêtement est (sont) en un vernis durci ou équivalent déposée (s) en état fluide, de façon à y adhérer sur au moins l'une des faces de ladite couche de base.

Il peut être avantageux à ce que lesdites particules soient noyées dans au moins l'une des couches de revêtement.

De préférence, mais non nécessairement, au moins la face de la couche de base sur laquelle est déposé le revêtement est rendue rugueuse.

Au moins une partie desdites particules peut avoir une grandeur au moins égale à 3 μ ou au moins une partie desdites particules peut avoir une grandeur d'au moins égale à 20 μ.

L'invention concerne également un écran pouvant être au moins partiellement opaque et qui est réalisé en un matériau conforme à l'invention, dans lequel au moins une partie desdites particules a une grandeur maximale de 6 μ et que la quantité présente desdites particules est au moins égale à 15 % en poids de la couche dans laquelle elles sont noyées.

Selon un autre mode de réalisation d'un écran pouvant être au moins partiellement opaque, au moins une partie desdites particules a une grandeur d'au moins 20 μ et que la quantité présente desdites particules est au moins égale à 22 % en poids de la couche dans laquelle elles sont noyées.

L'invention concerne également un écrant pouvant être au moins partiellement translucide ou transparent réalisé en un matériau conforme à l'invention, dans lequel au moins une partie desdites particules a une grandeur maximale de 6 μ et que la quantité présente desdites particules est au moins égale à 15 % en poids de la couche dans laquelle elles sont noyées.

Selon un autre mode de réalisation d'un écran pouvant être au moins partiellement opaque pour exemple, au moins une partie desdites particules a une grandeur d'au moins 20 μ et que la quantité présente desdites particules est au moins égale à 22 % en poids de la couche dans laquelle elles sont noyées.

L'invention concerne également un écran pouvant être au moins partiellement translucide ou transparent réalisé en un matériau conforme à l'invention dans lequel, au moins une partie desdites particules a une grandeur d'au moins 20 μ et que la quantité présente desdites particules est au moins égale à 3 % en poids de la couche dans laquelle elles sont noyées ou encore en un matériau dans lequel au moins une partie desdites particules à une grandeur d'au moins 3 μ et que la quantité présente desdites particules est au moins égale à 3 % en poids de la couche dans laquelle elles sont noyées.

Toutefois, pour tout mode de réalisation susmentionné d'un écran, la couche de base et la (ou les) couche (s) de revêtement peuvent être translucides ou transparentes. Dans ce cas, l'opacité désirée peut être obtenue par un dosage approprié des particules dans la (ou les) couche (s) concernée (s) d'une part et par la grandeur des particules.

Il est avantageux qu'au moins l'une des faces de la couche de base soit rendue rugueuse par tout moyen connu, tel que sablage, impression à chaud par exemple. Afind d'obtenir le meilleur résultat possible de diffusion de la lumière, (réflexion ou transmission) il est souhaitable que les deux faces de la couche de base soient rugueuses ; on peut alors pratiquement éliminer le phénomène gênant de "point chaud" (HOT SPOT).

En général, le matériau selon la présente invention permet l'obtention d'une excellente transmission de la lumière incidente aussi bien pour la projection vidéo (image visible sur la face opposée à celle sur laquelle la lumière est projetée) ou encore la projection bifaciale (l'image est visible sur les deux faces dudit matériau, la projection de la lumière s'effectuant sur une seule face), en utilisant en combinaison la rugosité des faces de la couche de base avec une concentration relativement faible des particules réfléchissantes dans au moins l'une des couches, par exemple une couche de revêtement.

Le degré de la rugosité moyenne des faces de la couche de base est choisie en fonction de l'utilisation, de l'intensité de la source de lumière de la distance de la source de lumière du matériau pour une intensité donnée, de l'épaisseur du matériau, etc...

Dans un certain nombre de cas, il est avantageux d'utiliser des particules réfléchissantes dont au moins une partie est constituée par des particules ayant une grandeur relativement importante, entre 20 μ et 30 μ et, par exemple une grandeur moyenne de 25 μ.

Les particules réfléchissantes peuvent avoir des formes géométriques quelconque. Elles sont positionnés au hasard dans la couche où elles sont noyées, de façon irrégulière ; en effet, l'expérience a prouvé que l'on obtient ainsi une excellente diffusion de la lumière par rapport à l'axe d'incidence de la lumière projetée.

D'autres caractéristiques et avantages ressortiront du texte suivant et des figures y afférentes, donnés à titre d'exemple uniquement.

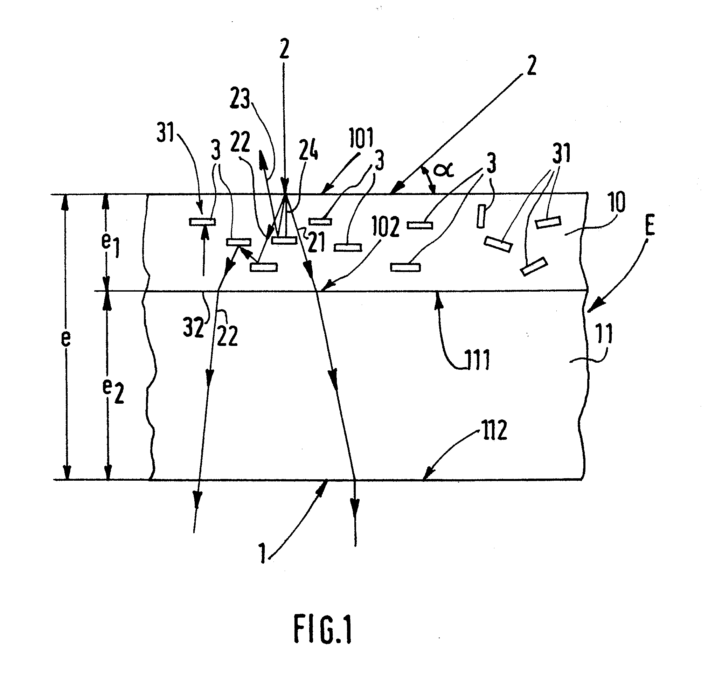

La fig. 1 montre de façon schématique un mode de réalisation, où le matériau est translucide ou transparent, et

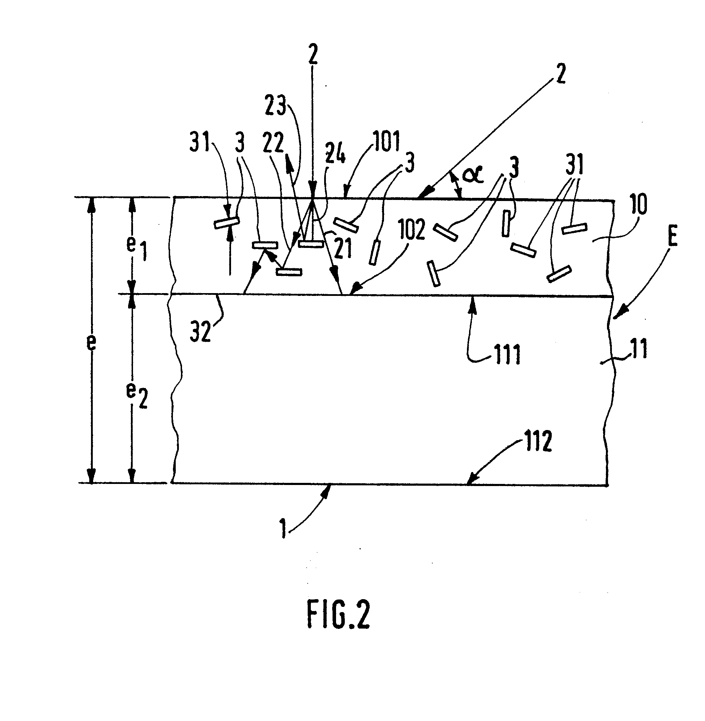

La fig. 2 montre de façon schématique un mode de réalisation, où le matériau est opaque.

Les mêmes numéros de références sont utilisés pour les mêmes éléments.

Comme c'est montré dans les figures, un semble (E) du matériau composite (1) est, par exemple, constitué d'une couche de base (11) et d'une couche de revêtement (1). La couche de base (11) peut être en une matière acrylique ou en verre ou similaire. La couche de revêtement (10) peut être un vernis à base acrylique ou vinylique glycérophtalique ou équivalent. L'épaisseur $(e_2)$ de la couche de base (11) peut atteindre 5 mm et plus, en fonction de la rigidité de l'ensemble (E) demandée. L'épaisseur $(e_1)$ de la couche (10) est de l'ordre de 4μ à 30 μ par exemple, mais peut, dans certains cas, atteindre des valeurs allant jusqu'à 1 mm. Plusieurs ensembles (E) peuvent être disposés l'un sur l'autre pour former un seul matériau (1) multi-ensembles. En outre, une couche de revêtement peut être disposée sur chaque face (111, 112) de la couche de base (11) formant ainsi un ensemble (E), ou au moins un sous-ensemble dans un matériau (1) multi-ensembles.

Dans les modes de réalisation montrés dans les figures, l'ensemble (E) comporte deux couches (10, 11), des particules réfléchissantes (3) étant noyées dans la couche de revêtement (1). La concentration des particules (3), c'est-à-dire le nombre et donc le poids moyen de particules par $cm^3$, ainsi que la grandeur moyenne de chaque particule sont fonction de l'utilisation, comme on le verra ci-après.

Les particules réfléchissantes (3) peuvent être métalliques ; en aluminium ou un alliage d'aluminium, par exemple, ou encore avoir au moins l'une de leurs faces (31) pourvues d'une matière réfléchissante.

Ce matériau (1) peut être utilisé pour des écrans, par exemple :

(i) - Un écran pour recevoir la projection des diapositifs, des films ou des images (sur papier ou équivalent). L'écran doit être opaque. Ce résultat est obtenu en rendant au moins l'une des faces (111) (112) de la couche de base (11) opaque, ou en utilisant un matériau opaque pour au moins l'une des couches (10, 11) ; selon un mode de réalisation, la face (111) en contact avec la face (102) de la couche (10) est rendue opaque. Il est encore possible d'obtenir l'opacité au moins partielle par une forte concentration de particules (3), de 15 % en poids de la couche (10). La grandeur moyenne des particules pour ce type d'écran ne dépasse, en général, pas 4 μ.

Un tel écran réfléchit pratiquement la totalité des rayons (2) de lumière incidente, et ceci pour une gamme importante de l'angle d'incidence α, pouvant atteindre 170° par rapport à la face (101) de la couche (10).

(ii) - Un écran peut montrer le ou les images reçues à partir d'au moins une source de lumière sur l'une et/ou l'autre face de l'ensemble (101, 112) ou sur l'une des faces (101) ou (112) seulement, donc pour la projection des diapositifs, films, etc, pour la video projection, pour la rétro-projection et la projection "bifaciale".

Le matériau est translucide ou transparent. La concentration des particules (3) est relativement faible : de l'ordre de 5 %. La grandeur moyenne des particules (3) est importante et peut être de l'ordre de 25 μ.

Conformément à un mode de réalisation, le matériau (1) composite montré dans la figure (1) comprend deux couches (10, 11) ; il a une épaisseur (e) égale à la somme des épaisseurs (e₁) de la couche (10) et (e₂) de la couche (11). La couche (11) est la couche de base. Elle peut être rigide en verre ou une matière synthétique appropriée, telle que l'acrylique ou équivalent. Il peut encore être constitué par plusieurs strates de matériaux transparents différents. L'épaisseur de la couche de base rigide est, évidemment fonction de sa surface ; toutefois, pour obtenir les meilleures images possibles sur les deux faces extérieures (101) et (112) dudit matériau composite (1), l'épaisseur de cette couche de base (11) rigide doit être aussi faible que compatible avec l'utilisation envisagée. Les déposants ont constaté que l'on obtient d'excellents résultats avec une couche de base (11) dont l'épaisseur est inférieure ou égale à 10 m/m. Une seule couche extérieure (10) est appliquée sur la face (111) de la couche de base (11), par exemple. On peut, pour certaines applications, par exemple pour rendre possible la projection d'une image soit d'une côté ou de l'autre du matériau composite (1), appliquér une couche extérieure aussi bien sur la face (111) de la couche (11) et sur sa face (112). La (ou les) couche (s) extérieure (s) (10) est (sont) réalisée (s) en un vernis ayant un poids spécifique de 10-15 gr/cm³ dans lequel sont noyées (ou disposées) des particules en une matière réfléchissante qui résiste aux composants (chimiques) du vernis et aux divers efforts mécaniques lors de l'application de ladite couche (10) sur la couche (11). Lorsque la couche de base (11) est en verre ou équivalent, le vernis utilisé pour la couche (10) est à base glycérophtalique ou équivalent. Lorsque la couche de base est en matière synthétique, par exemple en un matière acrylique ou équivalent, le vernis est à base acrylique ou vinylique. L'expérience a prouvé que l'épaisseur (e₁) de cette couche (1) a, pour l'exemple montré dans la figure, une épaisseur égale ou inférieure de 4 microns (0,004 m/m). Le vernis contient des particules en une matière réfléchissante. Les déposants ont utilisé des particules (3) en aluminium qui donnent d'excellents résultats pour un coût relativement faible. Dans l'exemple montré dans la figure, ces particules (3) ont une forme généralement parallélépipédique. Elles sont distribuées dans la couche (1) de façon irrégulière, aussi bien sur l'épaisseur (e₁) de la couche (10) que sur sa largeur (ou longueur). Ces particules (3) peuvent prendre n'importe quelle position dans la couche (voir partie droite de la figure) ; toutefois, pour la meilleure compréhension du fonctionnement, ces particules (3) sont positionnées, dans la partie gauche de la figure, de façon à ce que les plus grandes faces du parallélépipède soient parallèles aux surfaces (101) et (102) de la couche (10).

Le fonctionnement est le suivant : un rayon lumineux (2) blanc ou monochrome, en arrivant sur la face (101) de la couche (10) est, par exemple divisé en plusieurs rayons (21, 22, 23, 24) par réfraction et/ou par le phénomène de diffusion. Afin de diminuer la réfraction, il est donc important que les matières constitutives des couches (10) et (11) soient autant que possible homogènes et isotropes. Les rayons (21, 22, 23, 24) (et dans un cas idéal un rayon (2) ayant une incidence α par rapport à la face (101) ) sont réfléchis par les faces supérieures et, éventuellement inférieures des particules (3), ou encore ils traversent directement les couches (10) et (11). Les rayons réfléchis par les faces supérieures des particules (3) créent sur la face (101) une image de bonne qualité, et les rayons traversant les couches (10) et (11) soit directement, soit après réflexion par les faces inférieures des particules (3) créent une image quasi identique sur la face (112).

La couche (11) peut être flexible. Elle est, dans ce cas, par exemple, réalisée sous forme d'une feuille en matière synthétique telle que le MYLAR (Marque déposée). Cette couche (11) flexible est nécessairement peu épaisse et ne dépasse que rarement 1 m/m.

La couche (10) peut être appliquée sur la couche (11) par sérigraphie, par le procédé d'impression par rouleau (rotative) ou encore par projection sans l'utilisation d'air ou de gaz contenant de l'oxygène, etc.

Afin d'éviter tout scintillement et/ou scintillation qui pourraient être provoqués par la présence de particules (3) ayant une grandeur relativement importante, il suffit de diriger la projection de la lumière (donc de l'image) sur la face (112) de la couche de base qui ne porte pas de revêtement, cette surface étant également rendue rugueuse, la rugosité des surfaces (111, 112) permettant la diffusion la meilleure possible de la lumière incidente.

(iii) - Un écrant pouvant être utilisé, essentiellement, pour capter une image obtenue par projection vidéo. Le matériau (1) est rendu opaque de façon similaire à celle décrite dans le point (i) ci-dessus. La concentration est de l'ordre de 25 %. Les particules (3) ont une grandeur moyenne de 25 μ.

Cette concentration importante de particules grandes suffit, en principe, pour obtenir une opacité suffisante du matériau (1).

L'écran obtenu ainsi a une brillance exceptionnelle et peut avoir un gain de 10, comme les essais faits par les laboratoires du Centre National de la Cinématographie ont permis de constater. La courbe de luminosité de cet éran allant d'un état quasi totalement directionnel vers un état non directionnel permet de façonner l'écran pour l'utilisation désirée, en choisissant la rugosité des faces (111, 112) de la couche de base (11). Par exemple la rugosité peut être telle que le gain de brillance sera de l'ordre de 4, et que la courbe de luminosité permette l'obtention de 50 % de la lumière axialement réfléchie pour un angle α de 60° environ.

De nombreuses modifications et améliorations peuvent être apportées au matériau (1) et aux écrans utilisant ce matériau sans pour autant sortir du cadre de l'invention.

## Revendications

1.) - Matériau composite caractérisé en ce qu'il comprend au moins un ensemble (E) constitué par au moins une couche de base et au moins une couche de revêtement, et en ce que des particules (3) dont au moins l'une des faces est réfléchissante, sont disposées dans au moins l'une desdites couches (10, 11), la quantité desdites particules (3) étant au moins 3 % en poids de la couche dans laquelle elles sont disposées.

2.) - Matériau selon la revendication 1, caractérisée en ce qu'il est rigide.

3.) - Matériau selon la revendication 1, caractérisé en ce qu'il est flexible.

4.) - Matériau selon l'une des revendications précédentes, caractérisé en ce qu'il comporte au moins une couche de base (11) telle que le verre, ou en une matière synthétique rigide ou en une matière synthétique flexible, et au moins sur l'une de ses faces opposées (111, 112) une couche extérieure (10) en un vernis.

5.) - Matériau selon l'une des revendications précédentes, caractérisé en ce qu'au moins l'une desdites couches (10, 11) est composé d'au moins une strate en une matière homogène (verre, acrylique, etc.).

6.) Matériau selon l'une des revendications précédentes, caractérisé en ce que la matière constitutive de ladite couche (10) extérieure est un vernis à base glycérophtalique, la couche de base (11) étant en verre.

7.) - Matériau selon l'une des revendications 1 à 5, caractérisé en ce que la matière constitutive de ladite couche extérieure (10) est un vernis à base acrylique ou vinylique, la couche de base (11) étant en une matière synthétique, tel qu'acrylique ou équivalent.

8.) - Matériau selon l'une des revendications précédentes, caractérisé en ce que la couche de base (11) réalisé en une matière rigide à une épaisseur entre 1 m/m à 50 m/m.

9.) - Matériau selon l'une des revendications 1 à 7, caractérisé en ce que la couche de base (11) réalisée en une matière flexible a une épaisseur maximum de 5 m/m et, de préférence, une épaisseur inférieure à 1m/m.

10.) - Matériau selon l'une des revendications précédentes, caractérisé en ce que l'épaisseur de la couche (1) extérieure est inférieure à 0,05 m/m.

11.) - Matériau selon l'une des revendications précédentes caractérisé en ce que lesdites particules (3) réfléchissantes sont incorporées dans la (ou les) couche (s) extérieure (s) (10).

12.) - Matériau selon l'une des revendications précédentes, caractérisé en ce que lesdites particules (3) sont en un métal approprié, tel que l'aluminium (Al) ou équivalent ou un alliage d'aluminium ou équivalent, lesdites particules ayant un pouvoir de réflexion diffusée (ALBEDO) élevé.

13.) - Matériau selon l'une des revendications précédentes, caractérisé en ce que lesdites particules (3) sont réalisées sous forme de plaquettes sensiblement parallélépipédiques ayant une épaisseur maximale à celle de la couche extérieure (10).

14.) - Matériau composite selon les revendications précédentes, caractérisé en ce qu'au moins l'une des faces (111, 112, 102) d'au moins d'une desdites couches (10, 11) est rugueuse.

15.) - Matériau composite selon l'une des revendications précédentes, caractérisé en ce que la profondeur de rugosité moyenne est très fine jusqu'à moyenne (0,04 μ à 6 μ) selon les définitions précisées dans les DIN (Deutsche Industrie Normen) N° 4763 et 4764.

16.) - Matériau composite selon l'une des revendications précédentes caractérisé en ce qu'au moins l'une des couches (10, 11) d'un ensemble (E) est au moins partiellement opaque.

17.) - Matériau composite selon l'une des revendications précédentes, caractérisé en ce que toutes les couches (10, 11) sont au moins partiellement translucides ou transparentes.

18.) - Matériau composite selon l'une des revendications précédentes, caractérisé en ce que la couche de base (11) est en une matière rigide ou flexible tandis que la (ou les) couche (s) (10) de revêtement est (sont) en un vernis durci ou équivalent déposée (s) en état fluide de façon à y adhérer sur au moins l'une des faces de ladite couche de base (11).

19.) - Matériau composite selon l'une des revendications précédentes, caractérisé en ce que lesdites particules (3) sont noyées dans au moins l'une des couches (10) de revêtement.

20.) - Matériau composite selon l'une des revendications précédentes, caractérisé en ce qu'au moins la face (111) de la couche de base sur laquelle est déposé le revêtement est rendue rugueuse.

21.) - Matériau composite selon l'une des revendications précédentes, caractérisé en ce qu'au moins une partie desdites particules (3) a une grandeur au moins égale à 3 μ.

22.) - Matériau composite selon l'une des revendications 1 à 21, caractérisé en ce qu'au moins une partie desdites particules (3) a une grandeur d'au moins égale à 20 μ.

23.) - Ecran réalisé en un matériau tel que précisé dans l'une des revendications 1 à 22, caractérisé en ce qu'au moins une partie desdites particules (3) a une grandeur maximale de 6 μ et que la quantité présente desdites particules est au moins égale à 15 % en poids de la couche (10, 11) dans laquelle elles sont noyées.

24.) - Ecran réalisé en un matériau composite tel que précisé dans l'une des revendications 1 à 22, caractérisé en ce qu'au moins une partie desdites particules (3) a une grandeur d'au

moins 20 μ et que la quantité présente desdites particules est au moins égale à 22 % en poids de la couche (10, 11) dans laquelle elles sont noyées.

25.) - Ecran réalisé en un matériau composite tel que précisé dans l'une des revendications 1 à 22, caractérisé en ce qu'au moins une partie desdites particules (3) a une grandeur d'au moins 20 μ et que la quantité présente desdites particules (3) est au moins égale à 3 % en poids de la couche (10, 11) dans laquelle elles sont noyées.

26.) - Ecran réalisé en un matériau composite tel que précisé dans l'une des revendications 1 à 22, caractérisé en ce qu'au moins une partie desdites particules (3) a une grandeur d'au moins 3 μ et que la quantité présente desdites particules (3) est au moins égale à 3 % en poids de la couche (10, 11) dans laquelle elles sont noyées.

0281436

FIG.1

FIG.2

Office européen
des brevets

**RAPPORT DE RECHERCHE EUROPEENNE**

Numero de la demande

EP 88 40 0176

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 436 377 (J. MILLER)<br>* Résumé; figures 1-3; colonne 1, lignes 25,26; colonne 2, lignes 38-47; colonne 3, lignes 22-24,32-34; colonne 4, lignes 39-42,47-50 * | 1,2,4-7 ,11,13, 15,16, 19,23- 26 | G 02 B 5/124<br>G 09 F 13/16<br>G 02 F 1/133 |
| A | AU-B- 505 287 (3M CO.)<br>* Page 2, lignes 5-14,17,18,29,30; page 5, lignes 22-24; page 6, lignes 1-4,8,9; figure 2 * | 1,2,4-7 ,11,13, 15 | |
| A | US-A-3 551 025 (W. BINGHAM)<br>* Colonne 1, lignes 14-30 * | 3,4,11 | |
| A | US-A-3 984 176 (H. HIRAI)<br>* Figures 1-3; revendications * | 1 | |
| A | EP-A-0 156 246 (HITACHI/MAXELL LTD)<br>* Figures 1,2; revendications * | 1 | |

|  |
|---|
| **DOMAINES TECHNIQUES RECHERCHES (Int. Cl.4)** |
| G 02 B 5/00<br>G 02 B 27/00<br>G 09 F 13/00<br>G 02 F 1/133 |

Le présent rapport a été établi pour toutes les revendications

| Lieu de la recherche | Date d'achèvement de la recherche | Examinateur |
|---|---|---|
| LA HAYE | 08-05-1988 | WESBY P.B. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
 
& : membre de la même famille, document correspondant

EPO FORM 1503 03.82 (P0402)